# EUROPEAN PATENT APPLICATION

(11) **EP 1 764 759 A1**
(43) Date of publication of application: **21.03.2007**
(21) Application number: 06120575.3
(22) Date of filing: 13.09.2006
(51) Int. Cl.: G08G 5/04, G01C 23/00

(54) **System and method for displaying protected or restricted airspace inside an aircraft**

(30) Priority: 14.09.2005 US 227655
(71) Applicant: Honeywell International Inc., Morristown, New Jersey 07962 (US)
(72) Inventor: Dwyer, David B., Scottsdale, AZ 85254 (US)
(74) Representative: Haley, Stephen

(57) **Abstract**

A display system (100) and method for an aircraft display (202), in real-time, the protected airspace (312, 412) associated with an aircraft (304, 404) during a specific phase of flight. The system (100) processes aircraft data representative of a phase of aircraft flight and determines the protected airspace (312, 412) based at least in part on the processed data. An image (202) representative of the determined protected airspace (312,412) is displayed on the aircraft flight deck display system (100).

## Description

The present invention relates to a display for a vehicle and, more particularly, to a system and method for displaying the protected airspace associated with each phase of aircraft flight in an aircraft display.

Aircraft require a volume of airspace that provides an object free area for flight, known as the protected airspace. During the arrival and departure phase of flight, the protected airspace is defined as the airspace surrounding the airfield and extending from the surface upwards to a specific level that affords safety to air traffic movements in the vicinity of the airfield. During the en route phase of flight, aircraft also require a similar obstacle free protected airspace surrounding the plane.

The protected airspace associated with the approach and departure phase of flight typically extends vertically and horizontally from a level above an airfield surface, terminating at an upper level. For example, according to federal regulations, the protected airspace is the volume of airspace below 150 feet (45 m) above the established airport elevation, and along the runway and the extended runway centerline, that is required to be clear of objects in order to provide clearance protection for aircraft landings or takeoffs from the runway and for missed approaches.

The protected airspace for departure and arrival maneuvers is further defined by a primary surface area and a secondary surface area. The primary surface area is the main segment of the airspace which must have a consistent amount of clearance throughout and is defined as a rectangular area symmetrically located about each runway centerline and extending a distance of 200 feet beyond each runway threshold. Typically, the width of the primary surface area is based on the type of departure or approach a particular runway has, while the elevation is the same as that of the runway centerline at all points. The secondary surface area that makes up the protected airspace is a sloping surface that rises from the boundary of the primary surface area to the edge of its own boundary.

The protected airspace associated with the en route phase of flight is based on a minimum en-route altitude (MEA) and a minimum obstruction clearance altitude (MOCA). The procedures flight crews employ in the en route phase of flight take place in the structure of the National Airspace System (NAS). All published routes in the NAS are based on specific obstacle clearance criteria. The obstacle clearance areas for the en route phase of flight can be further defined by a primary obstacle clearance area and a secondary obstacle clearance area. As example, the primary obstacle clearance area has a protected width of 8 nautical miles (NM); 4 NM on each side of an aircraft's centerline and the secondary obstacle clearance area extends along a line 2 NM on each side of the primary area.

During all phases of aircraft flight, situational awareness is paramount. The United States Standards for Terminal Instrument Procedures (TERPS) set forth the departure and approach surface areas and the en route obstacle clearance areas that define an aircraft's protected airspace for an airway, departure or arrival procedure, or approach. Flight crews are provided navigation charts that allow them to navigate these airways, procedures, and approaches to maintain flight within the protected airspace. Of interest to flight crews in following these procedures, is the actual protected airspace associated with the procedures and more specifically the knowledge of the boundaries of the protected space, and communication to the flight crew during an unexpected occurrence that requires flight path deviation.

The data for determining the protected airspace during a specific phase of flight is not available to the flight crew. Thus, an aircraft may fly outside of the protected airspace during any given phase of flight without the flight crew's awareness of the situation. This can significantly increase the probability of, among other things, a controlled flight into terrain (CFIT) event.

Hence, there is a need for a display system and method that displays, in real-time, the protected airspace associated with the various phases of aircraft flight, to thereby reduce the workload on the flight crew during a unexpected occurrence and/or reduce the probability of a CFIT event occurring during an unexpected flight occurrence. The present invention addresses one or more of these needs.

The present invention provides a display system and method that displays, in real-time, the protected airspace associated with a given phase of aircraft flight.

In one embodiment, and by way of example only, a flight deck display system includes a processor and a display device. The processor is adapted to receive data representative of a phase of aircraft flight and is operable, in response thereto, to supply one or more protected airspace image rendering display commands. The display device is coupled to receive the image rendering display commands and is operable, in response thereto, to render an image representative of a protected airspace associated with the phase of aircraft flight.

In another exemplary embodiment, a method of displaying protected airspace on an aircraft flight deck display system includes the steps of processing aircraft flight phase data and determining a protected airspace based at least in part on the processed aircraft flight phase data and displaying an image representative of the determined protected airspace on the aircraft flight deck display system.

The present invention will hereinafter be described in conjunction with the appended drawing figures, wherein like numerals denote like elements, and in which:

FIG. 1 is a functional block diagram of a flight deck display system according to one embodiment of the present invention;

FIG. 2 is a simplified representation of an exemplary display screen that may be used in the system of FIG. 1, which shows the overall layout of the display screen, and on which is various images may be simultaneously displayed; and

FIG. 3 is an exemplary display screen that depicts a lateral situation view and a vertical situation view of the protected airspace associated with an en route phase of flight and various other data; and

FIG. 4 is an exemplary display screen that depicts a lateral situation view and a vertical situation view of the protected airspace associated with a departure phase of flight and various other data.

The following detailed description is merely exemplary in nature and is not intended to limit the invention or the application and uses of the invention. Furthermore, there is no intention to be bound by any expressed or implied theory presented in the preceding technical field, background, brief summary or the following detailed description.

The present invention may be described in terms of functional block diagrams and various processing steps. It should be appreciated that such functional blocks may be realized in many different forms of hardware, firmware, and/or software components configured to perform the various functions. For example, the present invention may employ various integrated circuit components, e.g., memory elements, digital signal processing elements, look-up tables, and the like, which may carry out a variety of ructions under the control of one or more microprocessors or other control devices. Such general techniques are known to those skilled in the art and are net described in detail herein. Moreover, it should be understood that the exemplary process illustrated may include additional or fewer steps or may be performed in the context of a larger processing scheme. Furthermore, the various methods presented in the drawing Figures or the specification are not to be consumed as limiting the order in which the individual processing steps may be performed. It should be appreciated that the particular implementations shown and described herein are illustrative of the invention and its best mode and are not intended to otherwise limit the scope of the invention in any way.

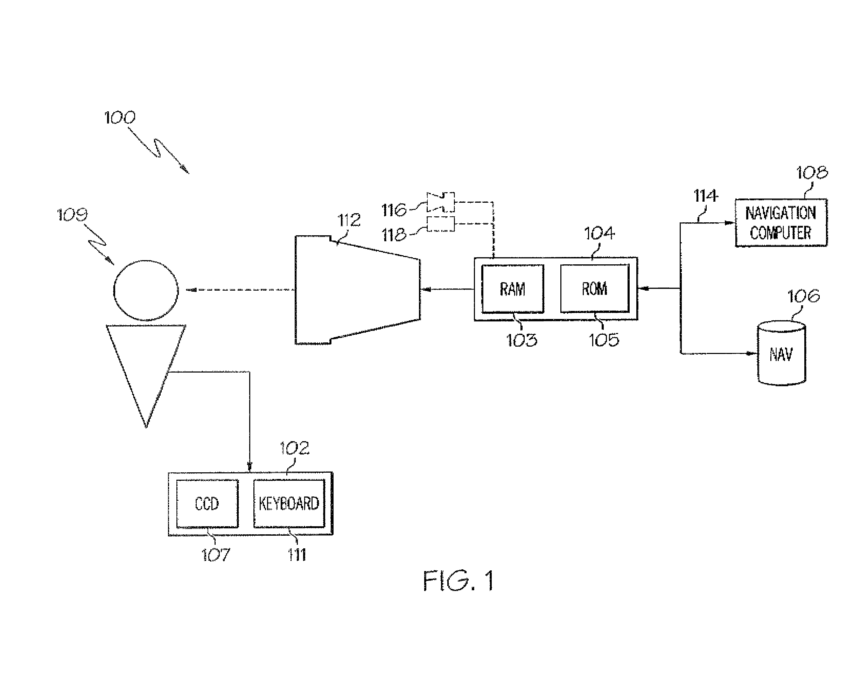

Turning now to the description, and with reference to FIG. 1, an exemplary flight deck display system will be described. The system 100 includes at least a user interface 102, a processor 104, one or more navigation databases 106, a navigation computer 108, and a display device 112. The user interface 102 is in operable communication with the processor 104 and is configured to receive input from a user 109 (e.g., a pilot) and, in response to the user input, supply command signals to the processor 104. The user interface 102 may be any one, or combination, of various known user interface devices including, but not limited to, a cursor control device (CCD), such as a mouse, a trackball, or joystick, and/or a keyboard, one or more buttons, switches, or knobs. In the depicted embodiment, the user interface 102 includes a CCD 107 and a keyboard 111. The user 109 uses the CCD 107 to, among other things, move a cursor symbol on the display screen, and may use the keyboard 111 to, among other things, input various data.

The processor 104 is in operable communication with the navigation computer 108 and the display device 112 via, for example, a communication bus 114. The processor 104 is coupled to receive various types of data from the navigation computer 108 and may additionally receive navigation data from one or more of the navigation databases 106, and is operable to supply appropriate display commands to the display device 112 that cause the display device 112 to render various images. Though not shown in FIG. 1, it will be appreciated that the processor 104 may additionally be coupled to receive various data from one or more other external systems. For example, the processor 104 may also be in operable communication with a source of weather data, a terrain avoidance and warning system (TAWS), a traffic and collision avoidance system (TCAS), an instrument landing system (ILS), and a runway awareness and advisory system (RAAS), just to name a few. If the processor 104 is in operable communication with one or more of these external systems, it will be appreciated that the processor 104 is additionally configured to supply appropriate display commands to the display device 112 so that the data supplied from these external systems may also be selectively displayed on the display device 112.

The processor 104 may include one or more microprocessors, each of which may be any one of numerous known general-purpose microprocessors or application specific processors that operate in response to program instructions. In the depicted embodiment, the processor 104 includes on-board RAM (random access memory) 103, and on-board ROM (read only memory) 105. The program instructions that control the processor 104 may be stored in either or both the RAM 103 and the ROM 105. For example, the operating system software may be stored in the ROM 105, whereas various operating mode software routines and various operational parameters may be stored in the RAM 103. It will be appreciated that this is merely exemplary of one scheme for storing operating system software and software routines, and that various other storage schemes may be implemented. It will also be appreciated that the processor 104 may be implemented using various other circuits, not just one or more programmable processors. For example, digital logic circuits and analog signal processing circuits could also be used.

The navigation databases 106 include various types of navigation-related data. These navigation-related data include various flight plan related data such as, for example, waypoints, distances between waypoints, headings between waypoints, navigational aids, obstructions, special use airspace, political boundaries, communication frequencies, aircraft departure and approach information, protected airspace data, and data related to different airports including, for example, runway-related data, It will be appreciated that, although the navigation databases 106 are, for clarity and convenience, shown as being stored separate from the processor 104, all or portions of these databases 106 could be loaded into the on-board RAM 103, or integrally formed as part of the processor 104, and/or RAM 103, and/or ROM 105. The navigation databases 106, or data forming portions thereof, could also be part of one or more devices or systems that are physically separate from the display system 100.

The navigation computer 108 is in operable communication, via the communication bus 114, with various data sources including, for example, the navigation databases 106. The navigation computer 108 is used, among other things, to allow the pilot 109 to program a flight plan from one destination to another, and to input various other types of flight-related data. The flight plan data may then be supplied, via the communication bus 114, to the processor 104 and, in some embodiments, to a non-illustratod flight director. In the depicted embodiment, the navigation computer 108 is additionally configured to supply, via the communication bus 114, data representative of the current flight path and the aircraft category to the processor 104. In this regard, the navigation computer 108 receives various types of data representative of the current aircraft state such as, for example, aircraft speed, altitude, and heading. The navigation computer 108 supplies the programmed flight plan data, the current flight path data, and, when appropriate, the aircraft category to the processor 104, via the communication bus 114. The processor 104 in turn supplies appropriate display commands to the display device 112 so that the programmed flight plan, or at least portions thereof and the current flight path may be displayed, either alone or in combination, on the display device 112. The processor 104 also receives data from the navigation databases 106, either directly or indirectly, and in turn supplies appropriate display commands to the display device so that at least a portion of the retrieved data are displayed on the display device 112 along with the flight plan and/or current flight path. It will additionally be appreciated that all or portions of the data mentioned herein may be entered manually by a user, such as the pilot 109.

The display device 112 is used to display various images and data, in both a graphical and a textual format, and to supply visual feedback to the user 109 in response to the user input commands supplied by the user 109 to the user interface 102. It will be appreciated that the display device 112 may be any one of numerous known displays suitable for rendering image and/or text data in a format viewable by the user 109. Non-limiting examples of such displays include various cathode ray tube (CRT) displays, and various flat panel displays such as, various types of LCD (liquid crystal display) and TFT (thin film transistor) displays, The display may additionally be based on a panel mounted display, a HUD projection, or any known technology. In an exemplary embodiment, display device 112 includes a panel display. To provide a more complete description of the method that is implemented by the display system 100, a general description of the display device 112 and its layout will now be provided.

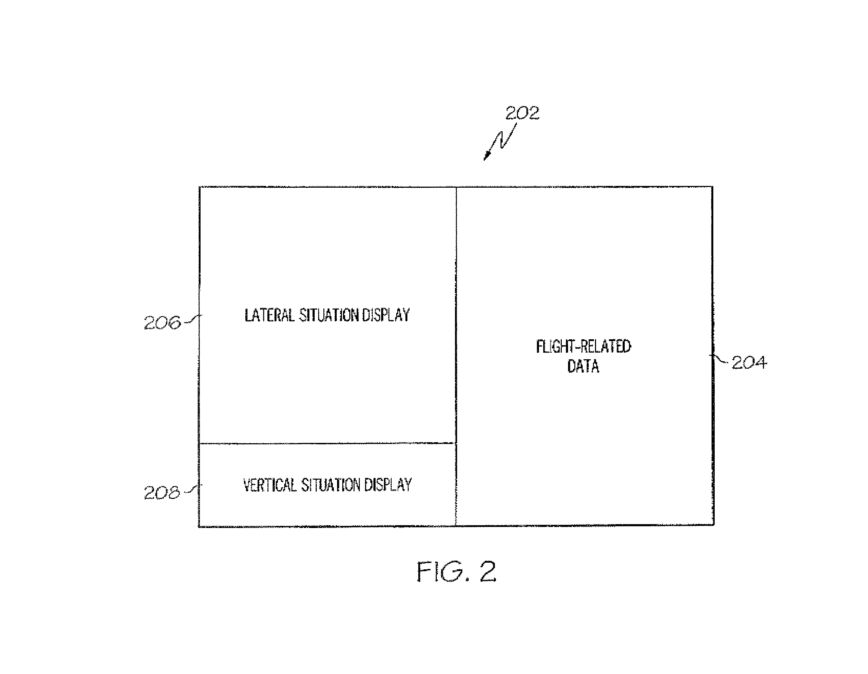

With reference to FIG. 2, it seen that the display device 112 includes a display area 202 in which multiple graphical and textual images may be simultaneously displayed, preferably in different sections of the display area 202. For example, general flight-related data 204, a lateral situation display 206, and a vertical situation display 208 may be displayed simultaneously, alone, or in various combinations, in various sections of the display area 202. The general flight-related data 204 that is displayed may include various types of data related to the flight plan of the aircraft. Such data includes, but is not limited to, the flight identifier, route iteration number, a waypoint list and associated information, such as bearing and time to arrive, just to name a few. It will be appreciated that the general flight-related data 204 may additionally include various types of data associated with various types of flight hazards. Examples of these, and other types of data that may be displayed, are disclosed in U.S. Patent No. 6,289,277, entitled "Interfaces for Planning Vehicle Routes," which is assigned to the assignee of the present application, and the entirety of which is hereby incorporated by reference.

The lateral situation display 206 provides a two-dimensional lateral situation view of the aircraft along the current flight path, and the vertical situation display 208 provides either a two-dimensional profile vertical situation view or a perspective vertical situation view of the aircraft along the current flight path and/or ahead of the aircraft. While not depicted in FIG. 2. the lateral situation display 206 and the vertical situation display 208 may each selectively display various features including, for example, a top-view symbol and a side-view aircraft symbol, respectively, in addition to various symbols representative of the current flight plan, various navigation aids, and various map features below and/or ahead of the current flight path such as, for example, terrain, runways, and political boundaries. It will be appreciated that the lateral situation display 206 and the vertical situation display 208 preferably use the same scale so that the pilot can easily orient the present aircraft position to either section of the display area 202. It will additionally be appreciated that the processor 104 may implement any one of numerous types of image rendering methods to process the data it receives from the navigation databases 106 and/or the navigation computer 108 and render the views displayed herein.

It was noted above that the flight-related data 204, the lateral situation display 206, and the vertical situation display 208 may be displayed either alone or in various combinations. Hence, before proceeding further with the description, it should be appreciated that, for clarity and ease of explanation and depiction, in each of the figures referenced below the lateral situation display 206 and the vertical situation display 208 are shown being displayed in combination in the display area 202 of the display device 112. In addition, is should be appreciated that while a multi-functional display (MFD) is described below, anticipated is the display of protected air space on a primary flight display (PFD).

Returning now to the description, as was previously noted, during a given phase of flight the pilot 109 is responsible for keeping the aircraft within a defined protected air space, also referred to as a protected airspace envelope. Thus, the processor 104 receives data (e.g. altitude, speed, flight path location, etc.) representative of the phase of flight (e.g. arrival, departure, en route) and supplies display commands that cause the lateral situation display 206, in addition to or instead of one or more of the features mentioned above, to render a two-dimensional lateral situation view of the protected airspace associated with that specific phase of flight. In addition, the processor 104 may supply display commands that cause the vertical situation display 208, in addition to or instead of one or more of the features mentioned above, to render a two-dimensional vertical situation view or a perspective vertical situation view of the protected airspace associated with the specific phase of flight.

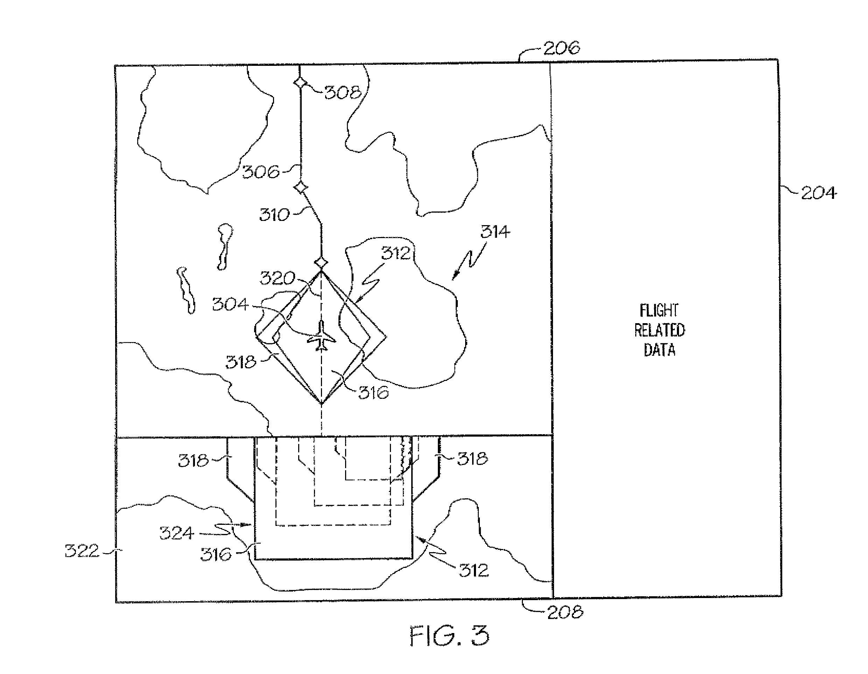

Referring now to FIG. 3, the processor 104 is adapted to receive data representative of a phase of aircraft flight and is operable, in response thereto, to supply one or more image rendering display commands. More specifically, the processor 104 supplies display commands that cause the lateral situation display 206 to render a two-dimensional lateral situation view of the protected airspace 312 associated with a given phase of flight, of which an en route phase of flight is illustrated in FIG. 3. The lateral situation display 206 includes a top-view aircraft symbol 304, and a flight plan 306 represented by one or more waypoint symbols 308 and interconnecting line segments 310, and an indicator of the protected air space 312. The lateral situation display 206 also preferably includes various map features including, but not limited to, a lateral two-dimensional view of terrain 314 below the flight plan, political boundaries, and navigation aids. It will be appreciated that for clarity only the terrain 314 map feature is shown in FIG. 3. The indication of the protected airspace 312 further identifies a primary obstacle clearance area 316 and a secondary obstacle clearance area 318. As illustrated, the primary obstacle clearance area 316 has a protected width of, for example, 8 nautical miles (NM); 4 NM on each side of a centerline 320 of the aircraft 304. The primary area standard widths of route protection are based upon system accuracy of a ± 4.5° angle from a navigational aid (NAVAID). These 4.5° lines extend out from the NAVAID and intersect the boundaries of the primary area at a point where pilots would change over from navigating away from the facility, to navigating toward the next facility. The secondary obstacle chance area 318 extends along a line 2 NM on each side of the primary obstacle clearance area 316. Navigation system accuracy in the secondary obstacle clearance area has standard widths of route protection of a ± 6.7° angle from the NAVAID. It should be appreciated that the actual dimensions can vary depending upon the size of the protected airspace. It is anticipated that not all protected airspace follows these dimensions. For example, countries may vary in their definition of protected airspace, which may define larger or smaller boundaries as set forth by their controlling agencies. In addition, advances in navigation may result in new classifications or airspace being defined or current airspaces may be reduced in size or change how they are defined.

The vertical situation display 208 also provides a view of the protected airspace 312. The vertical situation display 208 may provide the view of the protected airspace 312 ahead of the aircraft, and may show the terrain 314 and various other symbols and/or data (discussed further below) as either a two-dimensional profile vertical situation view or a perspective vertical situation view. In the depicted embodiment, the protected airspace 312 is displayed ahead of the aircraft and is shown as a perspective vertical situation view 322. It will be appreciated that the lateral situation display 206 and the vertical situation display 208 preferably use the same scale so that the pilot can easily orient the present aircraft position to either section of the display area 202. It will additionally be appreciated that the processor 104 may implement any one of numerous types of image rendering methods to process aircraft data and terrain data from a terrain database and render the vertical situation view 322. The indication of the protected airspace 312 illustrates the primary obstacle clearance area 316 and the secondary obstacle clearance area 318.

It was noted above that the flight-related data 204, the lateral situation display 206, and the vertical situation display 208 may be displayed in various combinations. Hence, before proceeding further with the description, it should be appreciated that, for clarity and ease of explanation and depiction, in each of the figures referenced below the lateral situation display 206 and the vertical situation display 208 are shown as being simultaneously displayed together in the display area 202 of the display device 112,

Returning now to the description, in displaying the perspective vertical situation view 208 of the protected airspace 312, the protected airspace 312 is displayed as a substantially transparent series of geometric shapes 324 generally similar to a so-called "highway in the sky", through which the pilot is to fly the aircraft 304. In a particular preferred embodiment, the size of each geometric shape 324 is based on the primary obstacle clearance area 316 and the secondary obstacle clearance area 318 of the protected airspace 312. The transparent series of geometric shapes 324 represents the protected airspace 312 of the flight plan 306 being flown (or to be flown).

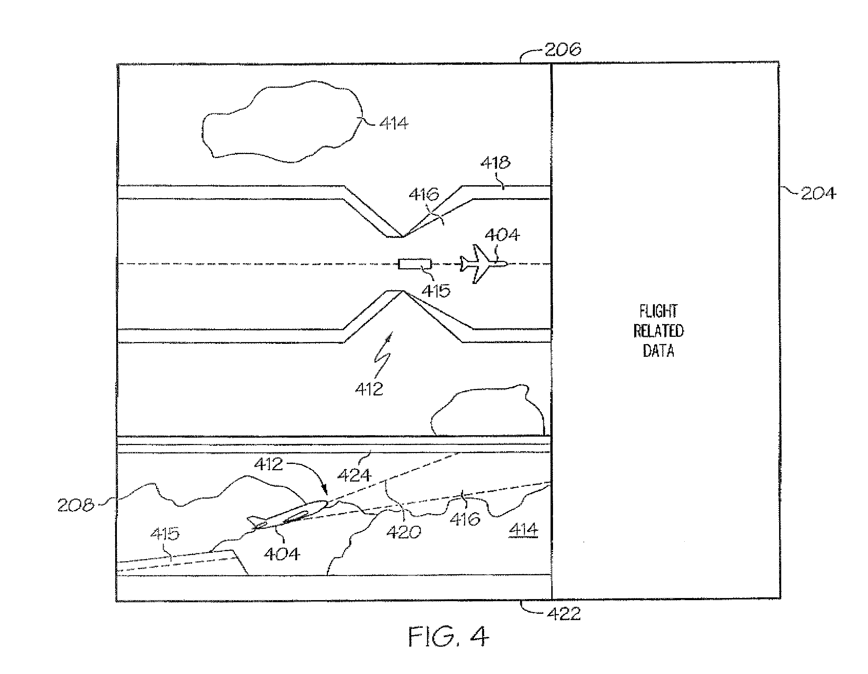

Referring now to FIG. 4, during an approach or departure phase of flight, the processor 104 supplies display commands that cause the lateral situation display 206 to render a two-dimensional lateral situation view of the protected airspace 412 associated with that given phase of flight. For purposes of explanation, FIG. 4 illustrates the associated protected airspace during a departs phase of flight. It should be appreciated, that a similarly associated protected airspace about the approaching airfield is evident during the approach/arrival phase of flight.

The lateral situation display 206 includes a top-view aircraft symbol 404 and a lined indicator of the protected air space 412. The lateral situation display 206 also preferably includes various map features including, but not limited to, a lateral two-dimensional view of terrain 414 below the flight plan, including a runway 415, political boundaries, and navigation aids. The indication of the protected airspace 412 further identifies a primary surface area 416 and a secondary surface area 418. The primary surface area 416 is a rectangular area symmetrically located about the runway centerline and extending a distance of 200 feet beyond each runway threshold laterally, and vertically as the volume of airspace below 150 feet (45 m) above the established airport elevation. The width of the primary surface area 416 is based on the specie type of departure or approach a particular runway has (e.g. course alignment, straight on arrival/departure, circle to land approach course, etc.) while the elevation is the same as that of the runway centerline at all points. The secondary surface area 418 that additionally makes up the protected airspace is the sloping surface that rises from the boundary of the primary surface to the edge of its own boundary.

The vertical situation display 208 also provides a view of the protected airspace 412. The vertical situation display 208 may provide the view of the protected airspace 412 ahead of the aircraft, and may show the terrain 414 and various other symbols and/or data (discussed further below) as either a two-dimensional profile vertical situation view or a perspective vertical situation view. In the depicted embodiment, the protected airspace 412 is displayed as a two-dimensional vertical situation view 422. As previously stated, it will be appreciated that the lateral situation display 206 and the vertical situation display 208 preferably use the same scale so that the pilot can easily orient the present aircraft position to either section of the display area 202. It will additionally be appreciated that the processor 104 may implement any one of numerous types of image rendering methods to process aircraft data and terrain data from a terrain database and render the vertical situation view 322. In the two-dimensional vertical situation display 208, the primary surface area 416 of the protected airspace 412 is shown.

Returning now to the description, in displaying the vertical situation view 208 of the protected airspace 412, the protected airspace 412 is displayed based on climb gradients as set forth by the United States Standard for Terminal Instrument Procedures (TERPS). It is appreciated that descent gradients are used for generating a display during the approach phase of flight. In general, standard climb and descent gradients are set forth to provide obstacle clearance of both natural and man-made vertical obstacles. In mountainous terrains, climb and descent gradients higher than standard are required. Of interest to the flight crews in following these gradients, is the actual protected airspace associated with the climb and descent gradients, and more specifically, the knowledge of the boundaries of the protected airspace.

During a departure maneuver, the failure of an engine, referred to as one engine inoperative (OEI) occurrence can be of great concern, especially in mountainous terrain. In response to an OEI occurrence, the flight crew is concerned with maneuvering the aircraft within the defined protected airspace 412. The flight crew must make a decision to remain on a current vertical/lateral flight path, or to deviate from that flight path if maintaining the current vertical/lateral flight path will take them out of protected airspace 412. The flight crew must determine how low the aircraft can fly along the lateral path and remain within lower limits of the protected airspace 412. This maneuver can be challenging because of the high work load experienced by the flight crew during an OEI. FIG. 4 illustrates in vertical situation display 422 the protected airspace 412 and the aircraft course or track 420 according to the standard climb gradients. Aircraft track 420 is based on a required climb gradient of 200 feet per NM. In addition, illustrated is an en route airway 424 and an obstacle identification slope (OIS) 424 as a vertical boundary of protected airspace 412.

In addition to causing the display device 112 to render an image of the protected airspace 312 or 412. the processor 104 is also preferably configured to supply image rendering commands that cause the display device 112 to render advisory indicia. More specifically, the processor 104 is preferably coupled to receive position data representative of current aircraft position or aircraft track and is further operable, in response thereto, to supply one or more aircraft position or track rendering display commands. The display device 112 is further coupled to receive the rendering commands and is further operable, in response thereto, to simultaneously render and image of the aircraft position or aircraft track relative to the protected airspace 312 or 412. Although the position and tracking data may be supplied from any one of numerous sources, in the depicted embodiments, the data is supplied from the navigation computer 108. No matter the specific source of the data, an image rendering command will be supplied if these data indicate that the aircraft is: (i) inside the protected airspace 312 and tracking toward a boundary of the primary obstacle clearance area 316; (ii) within a predetermined distance of a boundary of the primary obstacle clearance area 316; (iii) tracking toward a boundary of the primary surface area 416; or (iv) within a predetermined distance of the boundary of the primary surface area 416. The processor 104 supplies the image rendering command that causes the display device 112 to render the advisory indicia. It will be appreciated that this predetermined distance may vary.

The advisory indicia may additionally be rendered in response to various other parameters, not just distance. For example, the processor 104 may receive various other types of inertial data in addition to aircraft position data during a phase of flight, which are then processed to determine if the aircraft will reach or cross the boundary line of the protected airspace 312 or 412 in a predetermined amount of time. Data such as rate, distance, and altitude could be used to determine the amount of time to reach or cross from the aircraft current position to the border of the protected airspace 312 or 412. No matter the specific data used, if the processor 104 determines that the aircraft will reach, or go outside of, the protected airspace 312 or 412 within the predetermined time period, the processor 104 supplies the image rendering commands that cause the display device 112 to render the advisory indicia.

It will be appreciated that the advisory indicia may be rendered according to any one of numerous paradigms. For example, the color in which a boundary line of primary obstacle clearance area 316 and/or boundary line of secondary obstacle clearance area 318 and/or geometric symbols associated with areas 316 and 318 are rendered could change, in whole or in part, from one color to another. In another example, the color in which a boundary line of primary surface area 416 and secondary surface area 418 are rendered could change, in whole or in part, from one color to another. As a specific example the boundary line of area 316 could be rendered in blue if the aircraft is inside of the area 316 and thus within the protected airspace 312 and not within the predetermined distance or predetermined time period for exiting area 316; however, if the aircraft is within the protected airspace 312 and moves within the predetermined distance or will reach or cross the protected airspace 312 in the predetermined time period, the secondary obstacle clearance area 318 is then rendered in red. In an alternative exemplary embodiment, the advisory indicia is rendered as a separate symbol or set of symbols, such as text or other images.

It will additionally be appreciated that in still another alternative embodiment, which is shown in phantom in FIG.1, the system 100 may be conjured such that it additionally supplies visual and/or aural advisory indicia. For example, the system 100 could be configured to generate an aural warning when the aircraft is within a predetermined distance of the protected airspace 312 or 412. Alternatively, the system 100 could generate the aural warning 116 along with a visual indicator 118, either on the display device 112 or a separate dedicated visual indicator. It will be appreciated that this aural warning could be implemented in anyone of numerous ways such as, for example, a buzzer, horn, alarm, or a voice indicator that states, for example, "Leaving protected airspace!" In the depicted embodiment, this aural indicator is generated by processor 104; however, it will be appreciated that it could additionally be generated by a processor in the navigation computer 108, or in the previously mentioned and non-illustrated TAWS, or in any one of numerous other external systems or devices.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing the exemplary embodiment or exemplary embodiments. It should be understood that various changes can be made in the function and arrangement of elements without departing from the scope of the invention as set forth in the appended claims and the legal equivalents thereof.

## Claims

1. A flight deck display system (100) for an aircraft, comprising:
a processor (104) adapted to receive data representative of a phase of aircraft flight and operable, in response thereto, to supply one or more image rendering display commands; and
a display device (112) coupled to receive the image rendering display commands and operable, in response thereto, to render an image representative of a protected airspace (312, 412) associated with the phase of aircraft flight.

2. The system (100) of Claim 1, wherein the display device (112) is operable to render a two-dimensional lateral situation view image (206) representative of the protected airspace (312,412).

3. The system (100) of Claim 1, wherein the display device (112) is operable to render a perspective view image (208) representative of the protected airspace (312,412).

4. The system (100) of Claim 1, wherein the data representative of an aircraft flight phase comprises position data representative of current aircraft position.

5. The system (100) of Claim 1, wherein:
the processor (104) is further adapted to receive data representative of at least current aircraft track (420), and is operable, in response thereto, to supply aircraft track image rendering commands; and
the display device (112) is coupled to receive the aircraft track image rendering commands, and is further operable, in response thereto, to render the image of the protected airspace (412) with an advisory indicia and the current aircraft track (420) when the aircraft track (420) (i) is inside the protected airspace (412); and (ii) will result in reaching the protected airspace boundary line (412) at least within a predetermined time period.

6. The system (100) of Claim 1, wherein:
the processor (104) is further adapted to receive data representative of at least aircraft position, and is further operable, in response thereto, to supply one or more aircraft position rendering display commands; and
the display device (112) is further coupled to receive the aircraft position rendering commands and is further operable, in response thereto, to simultaneously render an image of the aircraft position (304, 404).

7. A flight deck system (100) for an aircraft, comprising:
a processor (104) adapted to receive data representative of an aircraft position during a phase of flight, the processor (104) operable, in response to these data, to (i) determine a protected airspace (312,412) associated with the aircraft (304,404), (ii) determine aircraft position relative to the protected airspace boundary, (iii)supply one or more image rendering display commands; and (iv) generate an advisory if the determined aircraft position is at least within a predetermined distance of the protected airspace boundary; and
a display device (112) coupled to receive the image rendering display commands and operable, in response thereto, to render an image (206) representative of a protected airspace (312, 412) associated with the aircraft position.

8. The system (100) of Claim 7, wherein the display device (112) is operable to render a two-dimensional lateral situation, view image (206) representative of the protected airspace (312,412).

9. The system (100) of Claim 7, wherein the display device (112) is operable to render a two-dimensional vertical view (208) of the protected airspace (312,412).

10. A method of displaying protected airspace (312, 412) on an aircraft flight deck display system (100), the method comprising the steps of:
processing aircraft flight phase data;
determining a protected airspace (312,412) based at least in part on the processed aircraft flight phase data; and
displaying an image (206,208) representative of the determined protected airspace (312,412) on the aircraft flight deck display system (100).
